# EUROPEAN PATENT APPLICATION

(11) **EP 3 901 936 A1**
(43) Date of publication of application: **27.10.2021**
(21) Application number: 20382327.3
(22) Date of filing: 22.04.2020
(51) Int. Cl.: G09B 19/00

(54) **METHOD, SYSTEM AND COMPUTER PROGRAMS FOR PADEL TENNIS TRAINING**

(71) Applicant: Copysan Communicaciones, SL, 31192 Mutilva (ES)
(72) Inventor: SANTOS OLLOQUI, José, 31192 Mutilva (ES); SANTOS JOSA, Juan Ignacio, 31192 Mutilva (ES); PUEYO BELZUZ, Javier, 31004 Pamplona (ES)
(74) Representative: Juncosa Miró, Jaime

(57) **Abstract**

A method, system and computer programs for padel tennis training are provided. The method acquires images using one camera hanged on a wall of a padel tennis court at a given height and having its field of view covering the whole playing surface. A processor creates a model of the padel tennis court using the acquired images; analyzes one or more frames of the acquired images to: extract a position of the padel tennis players in the padel tennis court, compute the distance between the detected padel tennis players and the distance of each padel tennis player to the net, detect the rackets of the padel tennis players, detect the trajectory of the padel tennis ball, and identify an action carried out by a given padel tennis player. The processor also establishes a training recommendation for said given padel tennis player using the identified action and the computed distances.

## Description

### Technical Field

The present invention is directed, in general, to the field of image analysis and computer vision of a sporting match or training. In particular, the invention relates to a method, system and computer programs for establishing personalized training instructions/recommendations for padel tennis players.

### Background of the Invention

Some methods and systems are known in the field for providing classification and analysis of a real sport game session.

WO 2019244153-A1 discloses computer vision-based systems and methods particularly suitable for analysis of images or videos of tennis. A processor analyzes the captured images or video using computer-vision algorithms, and detects a ball bounce event and its properties. Insights are generated with regard to the performance of one or more of the participating players. A device includes two adjacent and co-located cameras, oriented at an angle of 20 to 120 degrees relative to each other, capturing a combined field-of-view that covers at least 75 percent of an entirety of a tennis court.

WO 2013124856-A1 provides a Smart-court system, adaptive to constrained sport environment, for enabling real time analysis and debriefing of sport activities. The Smart-court system is comprised of: (i) an automatic recording system comprising a plurality of video cameras located in a court, arranged to real-time (RT) recording of a sport session and utilizing automatic calibration and stabilization module; and (ii) a data processing system comprising: a capture module for grabbing a video stream; an objects' detector module arranged to extract during the RT sport session, the objects from the foreground of each frame; an event module for automatically analyzing, the motion and the activities of the tracked objects for automatically identifying and classifying events, creating a synchronized event log and calculating statistics that occurred during the RT sport session; and a presentation module enabling to perform instant debriefing, combined biomechanical and tactical analysis of the video.

Other proposals are also known by WO 2019177361-A1, US 2018137363-A, US 20170083769-A1 and US10143907-B2.

None of these prior art documents allows however establishing individual tactical recommendations/instructions for the padel tennis players based on the calculation of different parameters and characteristics of the players, the rackets and the ball using different machine learning algorithms and neural networks.

### Description of the Invention

Embodiments of the present invention provide, according to one aspect, a method for padel tennis training. The proposed method comprises the acquisition of images (e.g. video images) of a padel tennis match or training by a single camera; creating, by at least one processor, a model of a padel tennis court using the acquired images; analyzing, by the processor, one or more frames of the acquired images; and establishing a personalized training recommendation/instruction for one or more of the padel tennis players.

According to the proposed method, the single camera is hanged on a wall of the padel tennis court at a given height and has its field of view covering the whole playing surface of the padel tennis court. Therefore, the acquired images includes all the lines of the playing surface, the padel tennis players, the padel tennis ball, the net, walls and fences of the padel tennis court and the rackets of the padel tennis players.

The analyzing step particularly comprises extracting a position of the padel tennis players in the padel tennis court by individually detecting the padel tennis players in said one or more frames and by tracking the detected padel tennis players using a machine learning algorithm; computing a distance between the detected padel tennis players and a distance of each detected padel tennis player to the net by converting coordinates of each detected padel tennis player to a real position within the created model of the padel tennis court; detecting the rackets of the detected padel tennis players using a detection model based on machine learning and/or convolutional neural networks; detecting a trajectory of the padel tennis ball, said trajectory including detecting when the padel tennis ball bounces on the playing surface, on the net, on a wall of the padel tennis court and/or on a racket; and identifying an action carried out by at least one given padel tennis player of the detected padel tennis players using the extracted position, the detected racket, the detected trajectory of the padel tennis ball and by further detecting pose and gesture parameters of said given padel tennis player.

According to the proposed method, the cited personalized training recommendation/instruction is established using the identified action of the given padel tennis player and the computed distances.

In an embodiment, the personalized training recommendation comprises a first indication of a position of where the padel tennis ball should not be directed; a second indication of a position where the padel tennis ball can be directed, though not being the optimal position; and a third indication of an optimal position to direct the padel tennis ball. The first, second and third indications are particularly different. For example the first indication can be provided using a red color, the second indication can be provided using a yellow color and the third indication can be provided using a green color. Alternatively, in other embodiments, different colors or symbols can be used to differentiate the different indications.

The recommendation established by the processor can be provided/displayed via a screen of a computing device for example using a particular software application or APP running on said computing device.

The cited action can comprise a forehand or backhand volley, a drop, a smash or a lob of the padel tennis ball; a first or a second serve; or a movement of the given padel tennis player towards the net or towards the bottom of the playing surface.

As known, tennis padel games are particularly played between two pairs of padel tennis players. In this case, the method would detect four different padel tennis players and identify which padel tennis players belong to a same team, further computing the distance between the detected padel tennis players of the same team.

In an embodiment, the processor compares different frames and re-identifies when a given padel tennis player appears in the compared frames using a re-identification algorithm.

In an embodiment, a first group of statistics of each detected padel tennis player is computed using the computed distances, for example the distance covered (or run or played) by each detected padel tennis player and/or the position on the padel tennis court most used by each detected padel tennis player and/or the length of time spent at a given position. In addition, a second group of statistics can be also computed, for example a player success rate, a player fault rate and/or an action rate. The second group of statistics is particularly computed using the different parameters/features computed of the players, rackets and ball.

In an embodiment, the statistics of different padel tennis players are compared. Hence the method can establish/provide performance matching between players.

In an embodiment the model of the padel tennis court is created by detecting on one or more frames of the acquired images the pixels that correspond to the edges of the tennis padel court using an edge detection algorithm; detecting on one or more frames of the acquired images the pixels that correspond to the padel tennis court lines using a line detection algorithm; and identifying the intersection/intersections of two or more lines of the padel tennis court.

The acquired images can be stored in a cloud computer server or in a memory of a physical computing device. In some embodiments, the acquired images can be calibrated to remove undesired shaky parts before the processing/analysis thereof.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The camera used for acquiring the images can be a RGB camera, among others, or the camera of a mobile computing device. Particularly, the camera is enclosed in a housing that includes one or more attaching elements, for example fastening straps, and a height adjustment component.

### Brief Description of the Drawings

The previous and other advantages and features will be more fully understood from the following detailed description of embodiments, with reference to the attached figures, which must be considered in an illustrative and non-limiting manner, in which:
Fig. 1 is a schematic illustration of a padel tennis court for including the proposed system for padel tennis training, according to an embodiment of the present invention.
Fig. 2 schematically illustrates some of the processes executed by the proposed method for padel tennis training.
Fig. 3 is a flow chart illustrating the different steps implemented during the analysis of the acquired images for computing or determining or estimating different parameters and/or features of the padel tennis players, the rackets and the padel tennis ball, according to an embodiment of the present invention.
Fig. 4 is a schematic illustration of a padel tennis court for generating the court model, according to an embodiment of the present invention.

### Detailed Description of Several Embodiments

The method and system of the present invention provide training recommendations (or instructions) based on different parameters and/or features of padel tennis players, rackets and padel tennis ball determined utilizing different machine learning algorithms and neural networks. The training recommendations can be showed to each individual padel tennis player via a software application or APP.

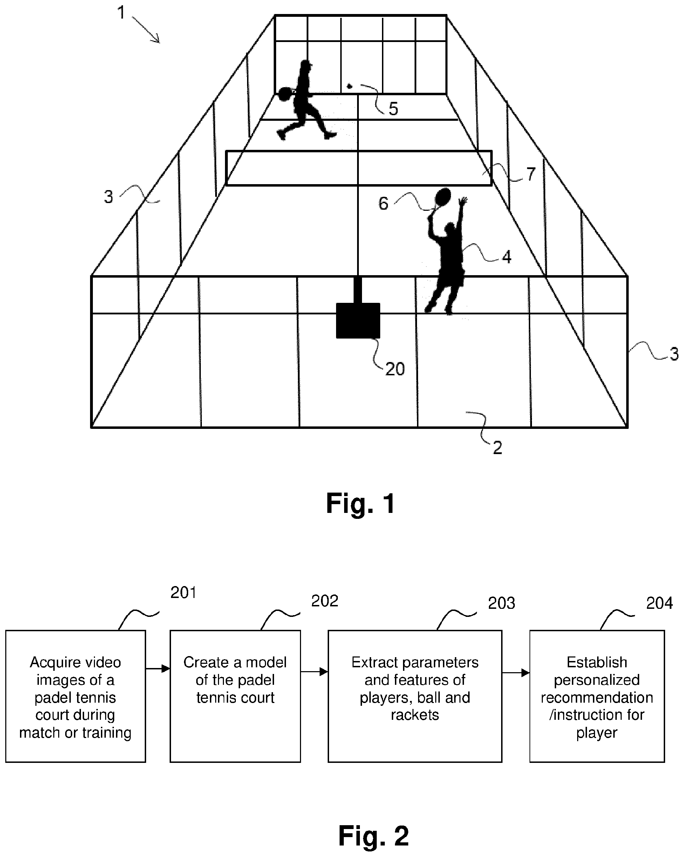

Fig. 1 illustrates an example of a padel tennis court 1 including (crystal or plastic) walls 2, fences 3, and the net 7. In Fig.1 some examples of padel tennis players 4, padel tennis ball 3 and rackets 6 have been also illustrated. A camera 20, a single one, for acquisition of images such as video images during a padel tennis match or training is also illustrated.

In the above embodiment, the camera 20 is hanged on the middle wall (or panel) 2 of the padel tennis court 1 at about three meters height. In operation, the camera 20 has its field of view covering the whole playing surface of the padel tennis court 1, therefore the acquired images comprise all the lines of the playing surface, the padel tennis players 4, the padel tennis ball 5, the net 7, the walls 2 and fences 3 of the padel tennis court 1 and the rackets 6 of the padel tennis players 4.

The camera 20 can be enclosed in a casing and be attached to said middle wall 2 via one or more fastening straps. The height at which the images are acquired can be modified by the casing also including a height adjustment element.

The camera 20 can be a RGB camera, among others, or the camera of a mobile computing device such as a Smartphone.

Fig. 2 illustrates an embodiment of the proposed method for padel training which comprises acquiring (step 201) video images of the whole padel tennis court 1 during a padel tennis match or training using the single camera 20. At step 202, a model of the padel tennis court 1 is generated by a processor of a computing system (not illustrated in the figures). The processor can comprise a multi-core central processing unit (CPU) and/or an integrated graphics processing unit (GPU). By having a mathematical model of the padel tennis court 1 the padel tennis players 4 and the padel tennis ball 5 can be located. Then, at step 203, parameters and features of the padel tennis players 4, ball 5 and rackets 6 are determined by analyzing one or more video frames of the acquired images. Finally, at step 204, a customized or personalized recommendation/instruction is established for at least one of the padel tennis players 4.

As said before, the training recommendations can be showed to each individual padel tennis player 4 via a software application or APP. The APP can display the court model and highlight different zones over which it is recommended or not to hit the padel tennis ball 5. In an embodiment the personalized recommendations/instructions are provided using different colors. For example, by providing a red indication of a position/zone of where the padel tennis ball 5 should not be directed; a yellow indication of a position/zone where the padel tennis ball 5 can be directed, though not being the optimal position; and a green indication of an optimal position/zone to direct the padel tennis ball 5. In other embodiments, the different indications are provided using different numbers or symbols.

The single camera 20 can include or can be connected to one or more wireless transceivers to allow the transmission of the acquired images to said computing system. The computing system can be a remote server (physical or cloud-based) or a Smartphone, PC, tablet, Smartwatch, etc. The computing system in some embodiments can further include the cited software application (or APP) installed therein to provide the recommendation(s) to the padel tennis player(s) 4.

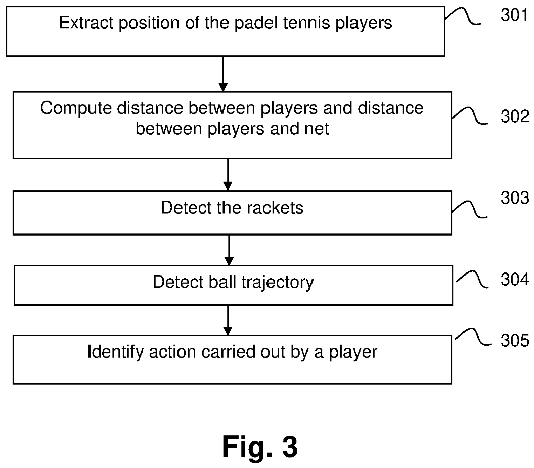

Fig. 3 is a flowchart of the video analysis executed by the processor for determining the parameters and/or features of the padel tennis players 4, rackets 6 and padel tennis ball 5, according to an embodiment of the present invention. According to this embodiment, the processor analyses one or more video frames and extracts, step 301, the position of the padel tennis players 4 in the padel tennis court 1 (or in the playing surface). This is done by individually detecting the padel tennis players 4 in said one or more video frames and by tracking the detected padel tennis players 4, using a machine learning algorithm or deep learning algorithm, for example using the Yolo V3 algorithm, SSD, Fast RCNN, among others. Because the padel tennis players 4 can disappear in some frames and appear again in later frames, in some embodiments a re-identification algorithm (e.g. Deep Sort, Dlib based Correlation tracker, GOTURN, a Rule based algorithm, among others) can be used in order to reidentify the padel tennis players 4.

At step 302, the distance between the detected padel tennis players 4 and the distance of each detected padel tennis player 4 to the net 7 is computed. This can be done by converting the coordinates of each detected padel tennis player 4 to a real position within the created model of the padel tennis court 1. At step 303, the rackets 6 used when hitting the padel tennis ball 5 are detected using a detection model based on machine learning and/or convolutional neural networks. The information from the hits will be used to find out which padel tennis player 4 hit the padel tennis ball 5, how many times he hit it, whether the padel tennis ball 5 touched the net 7 after hitting it and other features interesting to the game. At step 304, the trajectory of the padel tennis ball 6 is also detected, for example when the padel tennis ball 5 bounces on the playing surface, on the net 7, on a wall 2 of the padel tennis court 1 and/or on a racket 6. In some embodiments, a ball path refining algorithm can be used for computing the ball trajectory. For example, the Tracknet or the Yolo algorithm can be used for tracking the padel tennis ball 6 and/or for computing the padel tennis ball trajectory.

In an embodiment, all ball position data is stored in a single array. Then, false detection of ball prediction is removed. Each video frame can be processed by executing the following processes:
- If a ball position is predicted in the current video frame, the algorithm will search for a next video frame with the ball position predicted. This search is limited up to four next consecutive frames only.
- If a distance between a video frame and its consecutive video frame is less than a threshold distance ('d' pixels) the video frame is stored in temporary array.
- If the length of temporary array is greater than a threshold the temporary array is stored in a final array.

Following, linear regression is applied to the final array. For each video frame, if the ball 5 is not predicted in it and there is a successful ball prediction in the previous video frame, the next consecutive video frame within 'n' numbers of video frame after the present video frame is checked. If there is a consecutive video frame with ball predicted, a linear regression is applied using previous and the next consecutive frame's ball position to predict ball position at current video frame. The predicted ball position is inserted in final array at its corresponding video frame.

To check bounces, firstly three consecutive frames are processed at a time from the final array. Then, the algorithm creates first vector from first point to second point; creates two vectors from second point to third point; calculates the angle between two vectors created by three points; and checks for net 7 touch by checking if the angle is greater than a threshold 'th1' and the ball position within the area of net, making the net touch flag true to the corresponding video frame. Then, confirms net touch (part1) if two next consecutive frames has y-coordinate greater than the net touched video frame and confirms net touch (part2) if net touch is confirmed in part1 by checking for bounce of ball 5 within certain area at base of net 7. If the bounce near net 7 has occurred, net bounce is confirmed. The algorithm also looks for the video frame which has y-coordinate greater than the previous and next video frame. To confirm the bounce, the algorithm checks if the angle between two vectors is greater than a threshold 'th2' and if bounce event has occurred in the previous step.

Referring back to Fig. 3, at step 305, an action or actions carried out by the padel tennis player or players 4 is/are detected. The action/s can comprise a forehand or backhand volley, a drop, a smash a lob; a first or a second serve; a movement of the player towards the net or towards the bottom of the playing surface, etc. Particularly, the cited action/actions is/are detected by detecting pose and gesture parameters of the players and by using the previous computed features of the players, rackets and ball. Different machine learning techniques and neural networks can be used for that purpose, for example the OpenPose algorithm for multi-person 2D pose detection, Lighttrack, Alphapose, CNN-LSTM based model, etc.

Different statistics can be determined using the computed features of the players, rackets and ball such as the distance covered by each padel tennis player 4; the position most used by each player 4; a player success rate, a player fault rate; an action rate, among others. Likewise, the statistics of the different players can be compared to provide performance matching between players.

In an embodiment, the model of the padel tennis court 1 is generated by detecting the pixels that correspond to the edges of the tennis padel court 1 using an edge detection algorithm (e.g. the Canny Edge Detection algorithm), detecting the pixels that correspond to the padel tennis court lines using a line detection algorithm and by identifying the intersection/intersections of two or more lines of the playing surface.

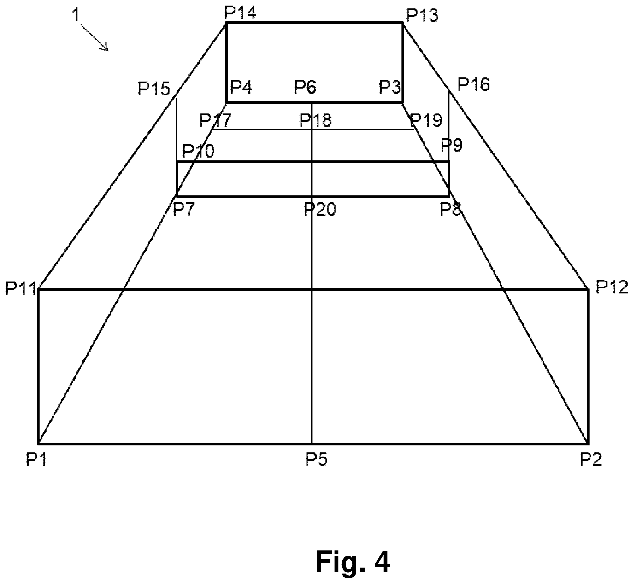

For example, the edges and line detection part can be implemented as follows:
1. Blur image, find edges using canny edge detection algorithm and detect all possible lines using Hough Line detection algorithm.
2.
   i. Detect five primary lines of the court (see Fig. 4) - front line (line 12), two side lines (line 14 and line 23), one mid line (line 56) and one net line (line 910)- on the basis of angle and vertical position.
   ii. If midline and/or front line is not detected, detect them using white masking and detecting lines using the Hough line detection algorithm.
3. Repeat 1 and 2 for nth frames using every kth frame, where n >= 10*k, and store lines detected in every frame in arrays of 5 primary lines
4.
   i. From all lines stored in side lines arrays find intersection points with front lines.
   ii. Select two lines with intersection points nearest and farthest to the x-axis
   iii. If any one of the two side lines is missing, mirror it using other side line
5.
   i. Find distance of mid lines of each frame with mid lines of every other frame from mid line array.
   ii. Select line having minimum distance
6. Run step 5 for the net line and front line using respective arrays.

With regard to Fig. 4, therein it is illustrated a particular embodiment of the court model generation. In this case, the padel tennis court is modeled by 20 points (P1...P20). The 20 points are calculated by:
1.
   i. Find intersection of line14 and line12 to calculate P1
   ii. Find intersection of line12 and 23 to calculate P2
   iii. Find intersection of line12 and 56 to calculate P5
   iv. Assume P10 as left end and P9 as right end of line 910; calculate temporary P7 and P8 in fixed distance from P10 and P9 respectively [left end (P10) and right end (P9) of line 910 is sifted in x-axis by distance 'd' and rotate in 90 degree to calculate temporary P7 and P8 respectively; find line 78 from P7 and P8]
   v. Find intersection of line 12 and line 78 to calculate P20
   Vi. Shift P7 and P8 of line 78 in x-axis by distance proportional to length of line 12 and rotate in -90 degree to calculate temporary P17 and P19 respectively; find temporary line 1719 from P17 and P19
   Vii. Find intersection of line 56 and line 1719 to calculate P18
   Viii. Shift temporary P7 and P8 of line 78 in x-axis by distance proportional to length of line 12 and rotate in -90 degree to calculate temporary P4 and P3 respectively; find temporary line 34 from P3 and P4
   Ix. Find intersection of line 56 and temporary line 34 to calculate P6
   X. Find intersection of line 14 and temporary line 34 to calculate P4
   Xi. Find intersection of line 23 and temporary line 34 to calculate P3
   Xii. Find intersection of line 14 and temporary line 78 to calculate P7
   Xiii. Find intersection of line 23 and temporary line 78 to calculate P8
   Xiv. Shift P7 and P8 in x-axis by distance proportional to length of line 12 and rotate in -90 degree to calculate temporary P10 and P9 respectively
   Xv. Find intersection of line 14 and temporary line 1719 to calculate P17
   Xvi. Find intersection of line 23 and temporary line 1719 to calculate P19
   Xv. Shift P1 and P2 in x-axis by distance proportional to length of line 12 and rotate in -100 and -80 degree respectively to calculate P11 and P12
   Xvi. Shift p3 and p4 in x-axis by distance proportional to length of line 12 and rotate in -88 and -92 degree respectively to calculate P13 and P14
   Xvii. Shift P7 and P8 in x-axis by a fixed distance and rotate in -94 and -86 degree respectively to calculate temporary P15 and P16
   Xviii. Find temporary line 715 from point P7 and temporary P15
   Xix. Find temporary line 1114 from point P11 and P14
   Xx. Find intersection of temporary line 715 and temporary line 1114 to calculate P15
   Xxi. Find temporary line 816 from P8 and temporary P16
   Xxii. Find temporary line 1213 from P12 and P13
   Xxiii. Find intersection of temporary line 816 and temporary line 1213 to calculate P16.
2. A line is obtained from two points; which consists of a tuple (x1, y1, x2, y2), length, midpoint, ishorizontal, isvertical, isoblique, slope and coefficients in the form ax +by +c =0.
   I. Find line 12 from P1 and P2
   li. Find line 23 from P2 and P3
   lii. Find line 34 from P3 and P4
   Iv. Find line 14 from P1 and P4
   V. Find line 56 from P5 and P6
   Vi. Find line 78 from P7 and P8
   Vii. Find line 1719 from P17 and P19
   Viii. Find line 910 from P9 and P10
   Ix. Find line 710 from P7 and P10
   X. Find line 89 from P8 and P9
   Xi. Find line 111 from P1 and P11
   Xii. Find line 212 from P2 and P12
   Xiii. Find line 313 from P3 and P13
   Xiv. Find line 414 from P4 and P14
   Xv. Find line 715 from P7 and P15
   Xvi. Find line 816 from P8 and P16
   Xvii. Find line 1112 from P11 and P12
   Xviii. Find line 1213 from P12 and P13
   Xix. Find line 1314 from P13 and P14
   Xx. Find line 1114 from P11 and P14

Various aspects of the proposed method as described herein may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data.

Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A method for padel tennis training, comprising:
a) acquiring, by a single camera (20), images during a padel tennis match or training, wherein the camera (20) is hanged on a wall (2) of a padel tennis court (1) at a given height and has its field of view covering the whole playing surface of the padel tennis court (1), the acquired images including the lines of the playing surface, the padel tennis players (4), a padel tennis ball (5), a net (7), walls and fences (2, 3) of the padel tennis court (1) and the rackets (6) of the padel tennis players (4);
b) creating, by a processor, a model of the padel tennis court (1) using the acquired images;
c) analyzing, by the processor, one or more frames of the acquired images and:
i. extracting a position of the padel tennis players (4) in the padel tennis court (1) by individually detecting the padel tennis players (4) in said one or more frames and by tracking the detected padel tennis players (4) using a machine learning algorithm;
ii. computing a distance between the detected padel tennis players (4) and a distance of each detected padel tennis player (4) to the net (7) by converting coordinates of each detected padel tennis player (4) to a real position within the created model of the padel tennis court (1);
iii. detecting the rackets (6) of the detected padel tennis players (4) using a detection model based on machine learning and/or convolutional neural networks;
iv. detecting a trajectory of the padel tennis ball (5), said trajectory including detecting when the padel tennis ball (5) bounces on the playing surface, on the net (7), on a wall (2) of the padel tennis court (1) and/or on a racket (6); and
v. identifying an action carried out by at least one given padel tennis player of the detected padel tennis players (4) using the extracted position, the detected racket (6), the detected trajectory of the padel tennis ball (5) and by further detecting pose and gesture parameters of said given padel tennis player; and
d) establishing, by the processor, a personalized training recommendation for said at least one given padel tennis player using the identified action and the computed distances.

2. The method of claim 1, wherein in said step i. four different padel tennis players (4) are detected, the method further comprising identifying which padel tennis players (4) belong to a same team and computing a distance between the detected padel tennis players (4) of the same team.

3. The method of any of previous claims, wherein step i. further comprises comparing, by the processor, different frames and re-identifying when a given padel tennis player (4) appears in the compared frames using a re-identification algorithm.

4. The method of any of previous claims, further comprising computing, by the processor, a first group of statistics of each detected padel tennis player (4) using the computed distances, said first group of statistics including the distance covered by each detected padel tennis player (4) and/or the position on the playing surface most used by each detected padel tennis player (4) and/or the length of time spent at a given position.

5. The method of claim 4, further comprising computing, by the processor, a second group of statistics of each detected padel tennis player (4), said second group of statistics including a player success rate, a player fault rate and/or an action rate.

6. The method of claim 4 or 5, further comprising comparing, by the processor, the statistics of different padel tennis players (4) and providing performance matching between players.

7. The method of any of previous claims, wherein said action comprises a volley, drop or lob of the padel tennis ball (5); a first or second serve; or a movement of the given padel tennis player (4) towards the net (7) or towards the bottom of the playing surface.

8. The method of any of previous claims, wherein the model of the padel tennis court (1) is created by:
detecting on one or more frames of the acquired images the pixels that correspond to the edges of the tennis padel court (1) using an edge detection algorithm;
detecting on one or more frames of the acquired images the pixels that correspond to the padel tennis court lines using a line detection algorithm; and
identifying the intersection/intersections of two or more lines of the padel tennis court (1).

9. The method of any of previous claims, wherein the personalized training recommendation comprises:
a first indication of a position of where the padel tennis ball (5) should not be directed;
a second indication of a position where the padel tennis ball (5) can be directed, though not being the optimal position; and
a third indication of an optimal position to direct the padel tennis ball (5),
wherein the first indication, the second indication and the third indication are not the same.

10. The method of any of previous claims, wherein step a) further comprises storing the acquired images in a cloud computer server or in a memory of a physical computing device.

11. A system for padel tennis training, comprising:
one camera (20) hanged on a wall (2) of a padel tennis court (1) at a given height with its field of view covering the whole playing surface of the padel tennis court (1), the camera being adapted to acquired images during a padel tennis match or training, said images including the lines of the playing surface, the padel tennis players (4), a padel tennis ball (5), a net (7), walls (2) and fences (3) of the padel tennis court (1) and the rackets (6) of the padel tennis players (4);
a computing system comprising a memory unit and at least one processing unit, wherein the memory unit is configured to store the acquired images, and wherein the at least one processing unit is configured to:
- create a model of the padel tennis court (1) using the acquired images;
- analyze one or more frames of the acquired images and:
extract a position of the padel tennis players (4) in the padel tennis court (1) by individually detecting the padel tennis players (4) in said one or more frames and by tracking the detected padel tennis players (4) using a machine learning algorithm;
compute a distance between the detected padel tennis players (4) and a distance of each detected padel tennis player (4) to the net (7) by converting coordinates of each detected padel tennis player (4) to a real position within the created model of the padel tennis court (1);
detect the rackets (6) of the detected padel tennis players (4) using a detection model based on machine learning and/or convolutional neural networks;
detect a trajectory of the padel tennis ball (5), said trajectory including detecting when the padel tennis ball (5) bounces on the playing surface, on the net (7), on a wall (2) of the padel tennis court (1) and/or on a racket (6); and
identify an action carried out by at least one given padel tennis player of the detected padel tennis players (4) using the extracted position, the detected racket (6), the detected trajectory of the padel tennis ball (5) and by further detecting pose and gesture parameters of said given padel tennis player; and
- establish a personalized training recommendation for said at least one given padel tennis player using the identified action and the computed distances.

12. The system of claim 11, wherein the camera (20) is enclosed in a housing, the housing including at least one attaching element and a height adjustment component.

13. A non-transitory computer program product comprising code instructions that when executed on a computing system comprises:
creating a model of a padel tennis court (1) using images of a padel tennis match or training acquired by one single camera (20) hanged on a wall of the padel tennis court (1) at a given height and with its field of view covering the whole playing surface of the padel tennis court (1), wherein the images includes the lines of the playing surface, the padel tennis players (4), a padel tennis ball (5), a net (7), walls (2) and fences (3) of the padel tennis court (1) and the rackets (6) of the padel tennis players (4);
analyzing one or more frames of the acquired images and:
i. extracting a position of the padel tennis players (4) in the padel tennis court (1) by individually detecting the padel tennis players (4) in said one or more frames and by tracking the detected padel tennis players (4) using a machine learning algorithm;
ii. computing a distance between the detected padel tennis players (4) and a distance of each detected padel tennis player (4) to the net (7) by converting coordinates of each detected padel tennis player (4) to a real position within the created model of the padel tennis court (1);
iii. detecting the rackets (6) of the detected padel tennis players (4) using a detection model based on machine learning and/or convolutional neural networks;
iv. detecting a trajectory of the padel tennis ball (5), said trajectory including detecting when the padel tennis ball (5) bounces on the playing surface, on the net (7), on a wall (2) of the padel tennis court (1) and/or on a racket (6); and
v. identifying an action carried out by at least one given padel tennis player of the detected padel tennis players (4) using the extracted position, the detected racket (6), the detected trajectory of the padel tennis ball (5) and by further detecting pose and gesture parameters of said given padel tennis player; and
establishing a personalized training recommendation for said at least one given padel tennis player using the identified action and the computed distances.

14. The non-transitory computer program product of claim 13, wherein four different padel tennis players (4) are detected, wherein said code instructions are further configured to identify which padel tennis players (4) belong to a same team and to compute a distance between the detected padel tennis players of the same team.

15. The non-transitory computer program product of claim 13 or 14, wherein the recommendation comprises:
a first indication of a position of where the padel tennis ball (5) should not be directed;
a second indication of a position where the padel tennis ball (5) can be directed, though not being the optimal position; and
a third indication of an optimal position to direct the padel tennis ball (5),
wherein the first indication, the second indication and the third indication are not the same.
